# EUROPEAN PATENT SPECIFICATION

(11) **EP 1 476 804 B1**
(45) Date of publication and mention of the grant of the patent: **25.03.2015**
(21) Application number: 03734753.1
(22) Date of filing: 30.01.2003
(51) Int. Cl.: G06F 3/033

(54) **IMPROVEMENTS RELATING TO OPTICAL DATA RECOGNITION**
VERBESSERUNGEN IN BEZUG AUF OPTISCHE DATENANERKENNUNG
AMELIORATIONS APPORTEES A LA RECONNAISSANCE DE DONNEES OPTIQUES

(30) Priority: 30.01.2002 GB 0202169
(43) Date of publication of application: 17.11.2004
(73) Proprietor: Innavisions Limited, Leigh Worcester WR6 5LA (GB)
(72) Inventor: BAGNALL, Paul Unit 5, Church Green, Warwickshire CV37 8NE (GB)
(74) Representative: Gray, James
(86) International application number: PCT/GB2003/000334
(87) International publication number: WO 2003/065193

(56) References cited:
- GB-A- 2 358 158
- US-A- 4 834 502

## Description

The present invention relates to an improved optically readable surface and in particular, though not exclusively, to an improved mouse mat.

Mouse mats have long been used to provide a substrate over which a computer mouse can be moved. The mouse mat is typically provided with a roughened upper surface over which the ball of the mouse can roll without skipping or slipping. By eliminating such slippage the movement of the mouse over the mouse mat is accurately translated into corresponding movement of a cursor on a computer screen.

Recent developments in the field of computer peripherals have seen the introduction of optical computer mice. In an optical mouse the mouse ball and its associated movement sensors are replaced by a light source, typically a light emitting diode (LED) and an optical sensor, both of which are provided in the underside of the mouse.

It has been observed that the performance of an optical mouse can be affected by changes in the surface over which it is used. This problem has been particularly noticeable when using an optical mouse on a mouse mat having a printed image thereon.

GB 2358158 is directed to a non-slip article such as a computer mouse mat wherein a textured cover layer overlies a design layer having an image printed thereon. US 4834502 is directed to a pad for an optical mouse including a substantially transparent sheet having a pattern of spaced dots on one surface thereof.

Two aspects of the present invention are apparatuses as defined in independent claims 1 and 13, respectively. Two other aspects of the invention are methods as defined in independent claims 17 and 26, respectively. Further embodiments of the invention are specified in the respective appended dependent claims.

The frequency modulated image prevents spatio-temporal aliasing of an optical position measurement sensor used in conjunction therewith, while the random texture of the surface enables said sensor to register portions of the image of uniform colour or image density, or of colours incompatible with any light source of the sensor. It will be appreciated that the term image encompasses, by way of non limiting example, such visually perceptible representations as random or repeating patterns, pictorial representations, photographic images, text, alphanumeric characters, cartoon images and maps. It will be understood that the term random texture is intended to cover a texture which does not embody a repeated pattern of any form.

In one embodiment the substrate comprises an image bearing layer and an overlying transparent layer, wherein the image bearing layer is provided with an image presented in a frequency modulated manner and the transparent layer is randomly textured. The transparent layer may comprise a layer of a plastics material. Alternatively the transparent layer may comprise a film of varnish. Such a film may have a thickness of around 5 microns. In yet a further embodiment the surface on which the image is presented may be textured. It will thus be appreciated in such an embodiment that a separate surface layer overlying the image is omitted. Preferably the image is a printed image. In describing the overlying layer as transparent, it will be understood that the this layer may be clear or tinted, but not to such an extent that the image is obscured.

In an alternative embodiment the substrate may comprise a single layer having on one side an image printed in a frequency modulated manner and on the other side a random texture. In such an embodiment the textured surface may be formed on the layer, for example during manufacture thereof, prior to application of the image. In an alternative embodiment the texture may be applied to the layer after the application of the image.

The substrate may be incorporated into a mouse mat. A mouse mat incorporating such a substrate may be used in conjunction with both optical mice and more conventional roller ball mice. The textured surface is able to interact with the ball of a conventional mouse, while the combination of the optical properties of the printed image and the textured surface enable optical mice to register movement over the substrate.

In a preferred embodiment the image bearing layer is printed in a stochastic manner. The substrate may be incorporated into another item, for example a mouse mat. The random texture preferably has a mean depth of around 0.5 mm. That is to say the mean distance between high and low points of said surface is no more than 0.5 mm. According to an alternative embodiment of the present invention there is provided a substrate for an optical sensor, the substrate having an image presented in a frequency modulated manner wherein the image is randomly textured.

The image is preferably provided on a substrate such as, for example, a layer of plastics material or paper. The step of applying the random texture to the image may comprise the step of texturing the image. In an alternative embodiment the step of applying the random texture may comprise the step of applying a transparent layer over the image and applying a random texture to the transparent layer. The transparent layer may comprise, for example, a thin layer of plastics material or a layer of lacquer or varnish applied to the image Application of the random texture to the transparent layer may be achieved by any appropriate means including, for example, urging the image and transparent layer against a former. Such a texturing operation may take place during an injection moulding operation. In such an embodiment the application of texture to the transparent layer may result in both the image and transparent layer being textured. Alternatively the application of texture may result in only the transparent layer being textured.

Embodiments of the present invention will now be described with reference to the accompanying drawings in which:
Figure 1 shows a perspective view of a mouse and a mouse mat;
Figure 2 shows an example of halftone printing;
Figure 3 shows an example of stochastic printing;
Figure 4 shows a cross-sectional view of two components of a first embodiment of the present invention;
Figure 5 shows a cross-sectional view of a mouse mat incorporating the components of figure 4;
Figure 6 shows a cross-sectional view of another mouse mat incorporating the components of figure 4;
Figure 7 shows a cross-sectional view of a component of a second embodiment of the present invention;
Figure 8 shows a cross-sectional view of a mouse mat incorporating the component of figure 7; and
Figure 9 shows a cross-sectional view of another mouse mat according to an embodiment of the present invention.

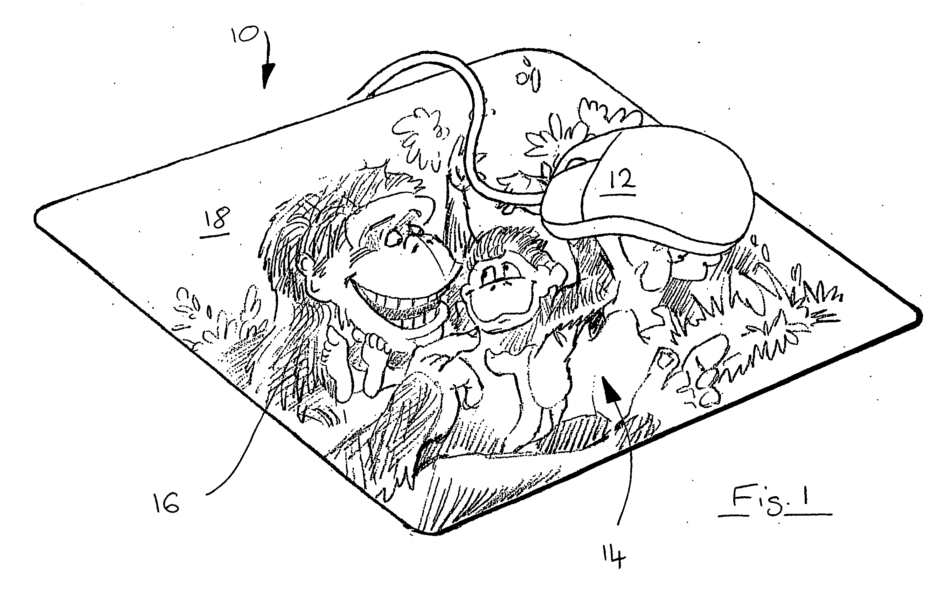

Referring firstly to figure 1 there is shown a mouse mat, generally designated 10, and a mouse 12. The mouse mat is provided with a printed image 14 incorporated therein. The mouse mat 10 may be manufactured by any appropriate means. For example the mouse mat 10 may comprise a foamed synthetic rubber base upon which there is provided respectively a sheet carrying the printed image 14 and a layer of clear plastic overlying the image sheet. Alternatively the mouse mat 10 may be manufactured in an injection moulding operation as described in the present applicant's co-pending international patent application published under the number WO 01/03918 (PCT/GB00/02625).

It has been observed that optical computer mice can experience problems when used in conjunction with printed image mouse mats 10 of the type shown. Movement of the mouse 12 over the mouse mat 10 is sometimes not accurately translated into movement of a screen cursor. This phenomenon has been observed when the optical mouse 12 is moved over both the primary image bearing portions 16 of the mat 10 and the relatively uncluttered background portions 18 of the mat 10. The reasons for these problems will now be discussed.

Dealing firstly with the problems associated with the background portions 18 of the mat 10, these by and large stem from the uniformity thereof. The background portions may typically comprise either unprinted areas corresponding to the base colour of the image carrying sheet, or areas printed in a single uniform colour. Either of these embodiments tend to prevent an optical mouse from operating as there is no discernible "pattern" to read.

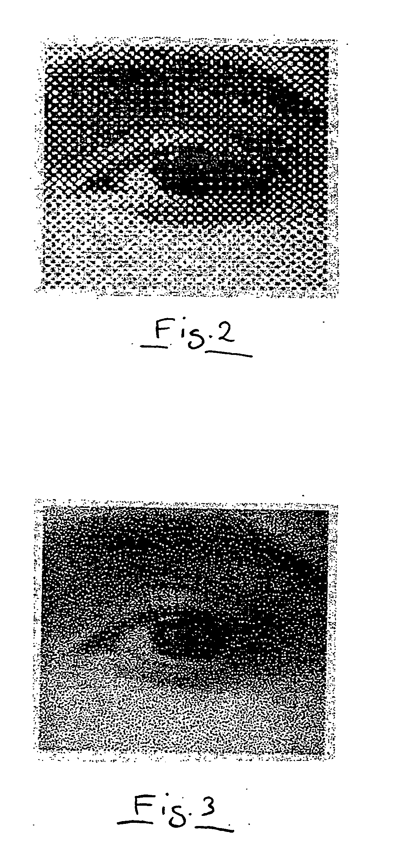

The problems associated with the primary image bearing portions 16 of the mat 10 stem from the manner in which the image 14 is printed. Typically the image sheets 14 are printed in a manner known as halftone printing or screening. In halftone screening the image to be printed is broken up into an array of dots. The dots are arranged on the printed page in regular lines and columns however their size is varied to recreate the image. The varying of the dot size is commonly referred to as Amplitude Modulation. An enlarged close up representation of an image printed in halftone is shown in figure 2. From a distance the human eye cannot register each individual halftone dot and hence the overall effect perceived by the viewer is that of coloured areas of varying intensity.

The provision of the halftone dots in a regular array can lead to perceived image imperfections by virtue of an effect known as aliasing. Spatial aliasing occurs when two linear arrays or meshes with closely matched periodicity are superimposed and viewed in front of a light background. Temporal aliasing occurs when a regularly occurring event is viewed only briefly and at regular intervals. If the intervals have almost the same period as that of the recurring vent then temporal aliasing occurs. These two effects combined result in spatio-temporal aliasing. This is achieved when a recurring event, which incorporates movement of an object with a pronounced regular pattern, is viewed briefly and at regular intervals. If the speed of movement is such that, between each viewing interval, the object moves approximately the distance equal to the pattern repetition distance, an appearance of slow or even reverse motion is created.

The optical sensor of an optical mouse typically scans at a rate of between 100 to 200 frames per second. Thus if the mouse is moved at such a speed that results in the scanning rate being the same or equal to an integer number of dot separations, spatio-temporal aliasing occurs and the mouse sensor does not accurately interpret the movement of the mouse as a whole.

The present invention seeks to eliminate the possibility of spatio-temporal aliasing being experienced by the optical sensor of the mouse by utilising images printed in a stochastic manner. Stochastic printing recreates an image using randomly positioned dots rather than uniformly positioned dots of varying size. In stochastic printing an image is created using very fine micro dots which are much smaller than conventional halftone dots. The micro dots are dispersed in a random manner by varying their frequency. Hence the term frequency modulated can be used to describe stochastic printing.

As described above, in halftone printing the dots are regularly spaced on a grid. In contrast, stochastic printing dot placement is modulated by the image to be printed, with dots being placed irregularly at a frequency that depends on the image grey value. In halftone printing the size of the dot depends upon image density value, while in stochastic printing the fixed size dots are arranged closer together or farther apart to represent different shades of colour.

Figure 3 shows the same image as figure 2 but rendered in a stochastic manner. It will be appreciated that the elimination of dots placed in a regular grid formation greatly reduces the opportunity for spatio-temporal aliasing to occur at the mouse optical sensor. With regard to the aforementioned problem with plain or unpatterned backgrounds, the present invention addresses this problem by providing a randomly textured and optically transparent layer over the image. The random texture of this layer creates features of light and shadow which are discernible by the mouse optical sensor. Aliasing is prevented by the random nature of the texture.

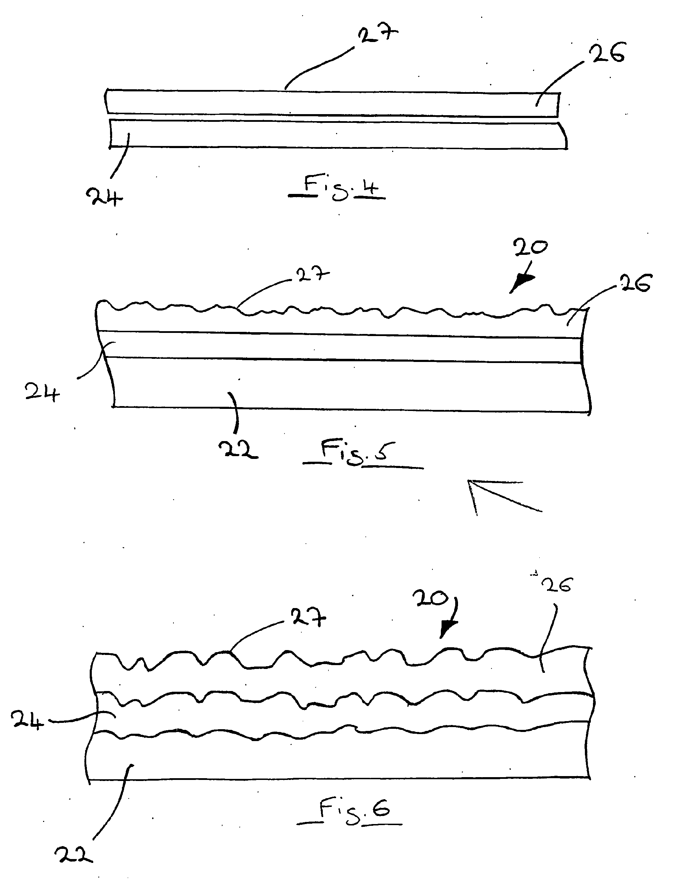

Referring now to figure 4 there is shown a cross sectional view of two layers 24, 26 which may be utilised so as to construct a mouse mat 20 as illustrated in the cross-sectional views of figures 5 and 6. The layers 24, 26 of figure 4 comprise a stochastic image bearing layer 24 and a surface layer 26. The surface layer 26 is shown with a flat, untextured upper surface 27, which is to say the surface which faces away from the image bearing layer 24. In such an embodiment texture is applied to the upper surface 27 during manufacture of a mouse mat 20 as will be described below. It will be understood that in an alternative embodiment the surface layer 26 may be provided in a pre-textured form.

Referring now to figure 5 there is shown a cross-sectional view of a mouse mat, generally designated 20, comprising a base 22, a stochastic printed image bearing layer 24 and a surface layer 26 having a randomly textured surface 27. The mat 20 is formed in an injection moulding operation as described in the above referenced International patent application publication. The image bearing and surface layers 24,26 may both manufactured from plastics materials. In an alternative embodiment the image bearing layer 24 may be manufactured from paper and the surface layer 26 of a plastics material. In such an embodiment the image bearing layer 24 may comprise paper having a weight of 150 GSM and the surface layer 26 may comprise clear polypropylene having a thickness of between 12 to 25 microns, preferably around 20 microns. While in this embodiment the surface layer 26 is described as being clear, it will be appreciated that the layer 26 may be colour tinted.

The layers 24,26 are laid up in a mould which is configured so as to impart the random texture to the surface 27. This is achieved by providing a corresponding randomly textured surface on a portion of the mould which, in use, faces the surface layer 26. The random texture of the mould may be achieved by, for example, a spark erosion process. Plastic is subsequently injected into the mould to form the base 22. The heat and pressure in the mould incorporate the layers 24, 26 to the base 22 and further cause the outer surface 27 of the surface layer 26 to adopt the texture provided in the mould. In the embodiment of figure 5 it will be appreciated that the only the surface layer 26 is randomly textured, with the image bearing layer 24 retaining the substantially planar appearance it embodied prior to moulding of the mouse mat 20.

Figure 6 shows an alternative embodiment of a mouse mat 20 wherein both the surface layer 26 and, to a certain extent, the image bearing layer 24 are both textured. Such a configuration may occur where the surface layer 26 is particularly thin. The use of a thin surface layer is advantageous in order that the quality of the image is not degraded by the textured surface layer 26.

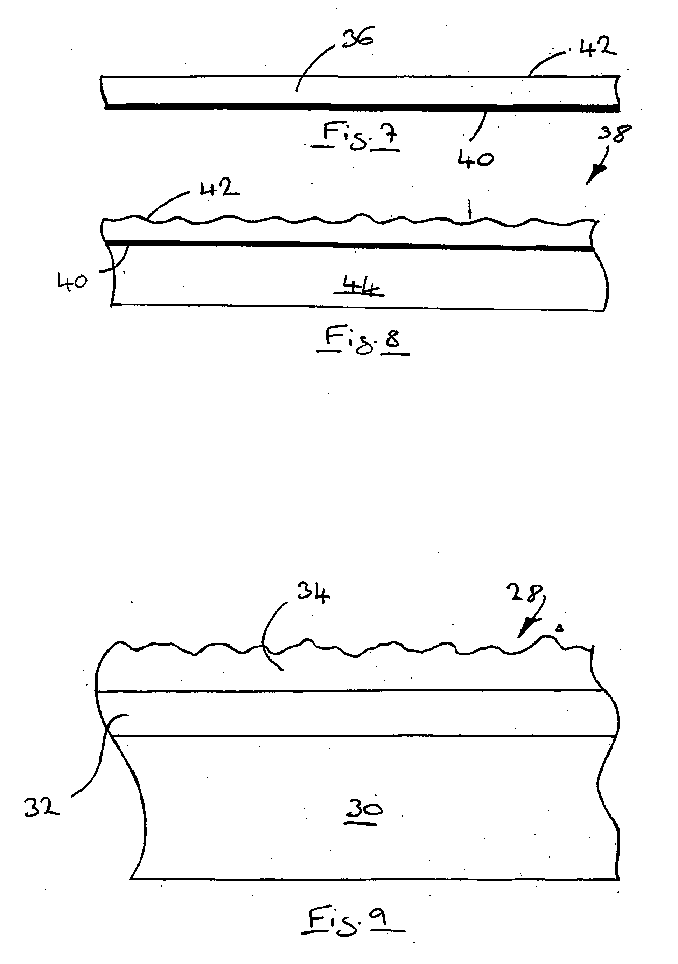

Referring now to figure 7 the is shown an alternative embodiment of a single layer or sheet 36 which may be used to manufacture a mouse mat such as that generally designated 38 in figure 8. The sheet 36 is manufactured from a plastics material such as, for example, polypropylene. On one side of the sheet 36 there is provided a film of ink 40 defining an image or indicia which are printed directly onto the sheet 36. As before, the embodiment of figure 7 shows the outer surface 42 of the sheet 36 to be flat and un-textured. Figure 8 shows a mouse mat 38 incorporating the printed sheet 36 of figure 7. As in the embodiment described above, the mat 38 includes a base 44 of a plastics material which has been injected into a mould containing the printed sheet 36. A texture has been applied to the sheet surface 42 during the moulding process.

Figure 9 shows a cross-sectional view of an alternative embodiment of a more conventional mouse mat, generally designated 28. As before the mat 28 comprises a base 30, a stochastic printed image bearing layer 32 and a randomly textured surface layer 34. The base 30 comprises a foamed synthetic rubber material such as, for example neoprene. The image bearing layer 32 may comprise paper, alternatively a plastics material of a layer of ink as described above.. In the case of paper or plastic, the image bearing layer 32 may be attached to the base 30 by any appropriate means such as, for example, adhesive. The surface layer 34 is a plastics material and is provided with a random textured pattern. As described above this texture may be preformed on the surface layer 34 or alternatively applied to the layer 34 during construction of the mat 28. It will be appreciated that in the embodiment where the surface layer is preformed with a texture, then such a surface layer will be thicker than for a surface layer which is adapted to receive a the texture after it has been associated with the image bearing layer. A pre-textured surface layer may typically have a thickness of between 100 to 200 microns. The surface layer 34 may be attached to the image bearing layer with adhesive also.

As will be readily understood from observing figures 2 and 3, stochastic printing provides a clearer, sharper and more detailed image than that which can be achieved by halftone printing. As a result of this stochastic printed mouse mats are perceived to be more visually appealing than halftone printed mats. The texturing of the layer overlying the image ensures that the mats, while being suitable for optical mice, can be used in conjunction with conventional ball mice. The textured surface additionally assists the optical sensor of the mouse to "see", and hence register movement over, colours which might otherwise be problematic. Optical mice typically utilise a red LED to illuminate the surface over which the mouse is traversing. This has the effect of making areas of red, orange and yellow tone almost disappear against a white background. The texture, as described above, creates features of light and shadow which are discernible by the mouse optical sensor irrespective of this apparent colour loss.

A further factor which has been found to affect optical mouse performance is that of "flying height" of the mouse. The flying height refers to the distance between the mousing surface and a datum plane of the optical sensor within the mouse. A typical optimum flying height for a mouse optical sensor is between 2.3 mm to 2.4 mm. This height is typically regulated by the provision of low friction pads on the underside of the mouse body which, in use, bear upon the mouse mat. Tests have indicated that mouse performance deteriorates rapidly if the flying height is exceeded by 0.5 mm or more. To this end the texture of the surface layer advantageously has a depth of no more than 0.5 mm so as to ensure that an acceptable flying height is maintained.

The foregoing examples refer specifically to mouse mats, however it will be understood that the combination of a stochastic printed image with a textured surface may be used in other instances where optical position measurement is used.

## Claims

1. A substrate for an optical mouse (12), the substrate having an image (14,24,40) and a surface (27,42) overlying said image (14,24,40) **characterised in that** the image is presented in a frequency modulated manner, and the surface is randomly textured.

2. A substrate as claimed in claim 1, wherein the substrate comprises an image bearing layer (24) and an overlying transparent layer (26), the image bearing layer (24) being provided with an image presented in a frequency modulated manner and the transparent layer (26) being randomly textured.

3. A substrate as claimed in claim 2 wherein both the image and the transparent layer (24,26) are randomly textured.

4. A substrate as claimed in claim 3 wherein the transparent layer (26) comprises a layer of lacquer or varnish.

5. A substrate as claimed in claim 4 wherein the transparent layer (26) has a thickness of around 5 microns.

6. A substrate as claimed in any of claims 1 to 3 wherein the transparent layer (26) comprises a layer of plastics material.

7. A substrate as claimed in claim 6 wherein said transparent layer (26) has a thickness of between 12 to 25 microns.

8. A substrate as claimed in claim 7 wherein the transparent layer (26) has a thickness of around 20 microns.

9. A substrate as claimed in claim 1, wherein the substrate comprises a transparent layer (36) having on one side said image (40) presented in a frequency modulated manner and on the other side said random texture (42).

10. A substrate as claimed in claim 9 wherein the transparent layer (36) comprises a layer of plastics material.

11. A substrate as claimed in claim 10 wherein said transparent layer (36) has a thickness of between 12 to 25 microns.

12. A substrate as claimed in claim 11 wherein the transparent layer (36) has a thickness of around 20 microns.

13. A substrate for an optical mouse, the substrate having an image and a surface **characterised in that** the image is presented in a frequency modulated manner and the image and the surface are randomly textured.

14. A substrate as claimed in any preceding claim wherein the substrate is incorporated into a mouse mat (10,20,28,38).

15. A substrate as claimed in any preceding claim, wherein the image (14,24,40) is printed stochastically.

16. A substrate as claimed in any preceding claim, wherein the random texture of said randomly textured surface (27,42) has a mean depth of around 0.5 mm.

17. A method of forming a substrate for an optical mouse, the method comprising the steps of:
providing an image (14,24,40) presented in a frequency modulated manner on a substrate; and
applying a random texture (27,42) to the image.

18. A method as claimed in claim 17 wherein the step of applying the random texture (27,42) to the image comprises the step of texturing the image.

19. A method as claimed in claim 17 wherein the step of applying the random texture (27) comprises the steps of applying a transparent layer (26) over the image (24) and applying a random texture (27) to the transparent layer (26).

20. A method as claimed in claim 19 wherein the step of applying of the random texture (27) to the transparent layer (26) comprises urging the image (24) and transparent layer (26) against a former.

21. A method as claimed in claim 19 or claim 20 wherein the application of texture (27) to the transparent layer (26) results in both the image (24) and transparent layer (26) being textured.

22. A method as claimed in claim 19 or claim 20 wherein the application of texture (27) results in the transparent layer (26) being textured.

23. A method as claimed in claim 17 wherein the step of applying the random texture (27) to the image (24) comprises the step of applying a transparent layer (26) having a randomly textured surface over the image (24).

24. A method as claimed in claim 17, the method comprising the steps of:
providing a transparent layer of plastics material (36);
applying the image (40) presented in a frequency modulated manner to the transparent layer (36); and
applying a random texture (42) to the transparent layer (36).

25. A method as claimed in claim 24 wherein the image (40) is provided on one side of the layer (36) and the random texture (42) applied to the other side of the layer (36).

26. A method of forming a substrate for an optical mouse, the method comprising the steps of:
providing a transparent layer (36) of plastics material, said layer (26) having a random texture (27); and
applying an image (24) presented in a frequency modulated manner to the transparent layer.

## Patentansprüche

1. Unterlage für eine optische Maus (12), mit einem Bild (14, 24, 40) und einer über diesem liegenden Oberfläche (27, 42), **dadurch gekennzeichnet, dass** das Bild in frequenzmodulierter Weise dargestellt ist und die Oberfläche in zufälliger Weise texturiert ist.

2. Unterlage nach Anspruch 1 mit einer ein Bild aufweisenden Schicht (24) und einer darüber liegenden transparenten Schicht (26), wobei das Bild in frequenzmodulierter Weise dargestellt ist und die transparente Schicht (26) zufallstexturiert ist.

3. Unterlage nach Anspruch 2, bei welcher sowohl das Bild als auch die transparente Schicht (24, 26) in zufälliger Weise texturiert sind.

4. Unterlage nach Anspruch 3, bei welcher die transparente Schicht (26) eine Schicht aus Lack oder Firnis aufweist.

5. Unterlage nach Anspruch 4, bei welcher die transparente Schicht (26) eine Dicke von etwa 5 µm hat.

6. Unterlage nach einem der Ansprüche 1 bis 3, bei welcher die transparente Schicht (26) ein Plastikmaterial aufweist.

7. Unterlage nach Anspruch 6, bei welcher die transparente Schicht (26) eine Dicke zwischen 12 und 25 µm hat.

8. Unterlage nach Anspruch 7, bei welcher die transparente Schicht (26) eine Dicke von etwa 20 µm hat.

9. Unterlage nach Anspruch 1, welche eine transparente Schicht (26) aufweist, die auf einer Seite das in frequenzmodulierter Weise dargestellte Bild (40) und auf der anderen Seite die zufällige Textur (42) hat.

10. Unterlage nach Anspruch 9, bei welcher die transparente Schicht (36) eine Schicht auf Plastikmaterial aufweist.

11. Unterlage nach Anspruch 10, bei welcher die transparente Schicht (36) eine Dicke zwischen 12 und 25 µm hat.

12. Unterlage nach Anspruch 11, bei welcher die transparente Schicht (36) eine Dicke von etwa 20 µm hat.

13. Unterlage für eine optische Maus mit einem Bild und einer Oberfläche, **dadurch gekennzeichnet, dass** das Bild in frequenzmodulierter Weise dargestellt ist und sowohl das Bild als auch die Oberfläche zufällig texturiert sind.

14. Unterlage nach einem der vorstehenden Ansprüche enthalten in einem Mauspad (10, 20, 28, 38).

15. Unterlage nach einem der vorstehenden Ansprüche, bei welcher das Bild (14, 24, 40) stochastisch gedruckt ist.

16. Unterlage nach einem der vorstehenden Ansprüche, bei welcher die zufällige Textur der zufällig texturierten Oberfläche (27, 42) eine mittlere Tiefe von etwa 0,5 mm hat.

17. Verfahren zur Herstellung einer Unterlage für eine optische Maus mit den Schritten:
Aufbringen eines Bildes (14, 24, 40) in frequenzmodulierter Weise auf einem Substrat und
Aufbringen einer zufälligen Textur (27, 42) auf das Bild.

18. Verfahren nach Anspruch 17, bei welchem der Schritt des Aufbringens der zufälligen Textur (27, 42) auf das Bild den Schritt der Texturierung des Bildes umfasst.

19. Verfahren nach Anspruch 17, bei welchem das Aufbringen der zufälligen Textur (27) die Schritte umfasst: Aufbringen einer transparenten Schicht (26) über dem Bild (24) und Aufbringen einer zufälligen Textur (27) auf die transparente Schicht (26).

20. Verfahren nach Anspruch 19, bei welchem beim Aufbringen der zufälligen Textur (27) auf die transparente Schicht (26) das Bild (24) und die transparente Schicht (26) gegen einen Former gedrückt werden.

21. Verfahren nach Anspruch 19 oder 20, bei welchem beim Aufbringen der Textur (27) auf die transparente Schicht (26) sowohl das Bild (24) als auch die transparente Schicht (26) texturiert werden.

22. Verfahren nach Anspruch 19 oder 20, bei welchem beim Aufbringen der Textur (27) die transparente Schicht (26) texturiert wird.

23. Verfahren nach Anspruch 17, bei welchem beim Aufbringen der zufälligen Textur (27) auf das Bild (24) eine transparente Schicht (26) mit einer zufällig texturierten Oberfläche über dem Bild (24) aufgebracht wird.

24. Verfahren nach Anspruch 17, mit den Schritten:
Vorsehen einer transparenten Schicht aus Plastikmaterial (36),
Aufbringen des in frequenzmodulierter Weise dargestellten Bildes (40) auf die transparente Schicht (36) und
Aufbringen einer zufälligen Textur (42) auf die transparente Schicht (36).

25. Verfahren nach Anspruch 24, bei welchem das Bild (40) auf einer Seite der Schicht (36) und die zufällige Textur (42) auf der anderen Seite der Schicht (36) vorgesehen wird.

26. Verfahren zur Bildung einer Unterlage für eine optische Maus mit den Schritten:
Vorsehen einer transparenten Schicht (36) aus Plastikmaterial, wobei die Schicht (26) eine zufällige Textur (27) aufweist, und
Aufbringen eines in frequenzmodulierter Weise dargestellten Bildes (24) auf die transparente Schicht.

## Revendications

1. Substrat pour une souris optique (12), le substrat ayant une image (14, 24, 40) et une surface (27, 42) recouvrant ladite image (14, 24, 40), **caractérisé en ce que** l'image est présentée d'une manière modulée en fréquence, et la surface est texturée de manière aléatoire.

2. Substrat selon la revendication 1, dans lequel le substrat comprend une couche porteuse d'image (24) et une couche transparente recouvrante (26), la couche porteuse d'image (24) étant pourvue d'une image présentée d'une manière modulée en fréquence et la couche transparente (26) étant texturée de manière aléatoire.

3. Substrat selon la revendication 2, dans lequel la couche d'image et la couche transparente (24, 26) sont toutes deux texturées de manière aléatoire.

4. Substrat selon la revendication 3, dans lequel la couche transparente (26) comprend une couche de laque ou de vernis.

5. Substrat selon la revendication 4, dans lequel la couche transparente (26) a une épaisseur d'environ 5 microns.

6. Substrat selon l'une quelconque des revendications 1 à 3, dans lequel la couche transparente (26) comprend une couche de matériau plastique.

7. Substrat selon la revendication 6, dans lequel ladite couche transparente (26) a une épaisseur entre 12 et 25 microns.

8. Substrat selon la revendication 7, dans lequel la couche transparente (26) a une épaisseur d'environ 20 microns.

9. Substrat selon la revendication 1, dans lequel le substrat comprend une couche transparente (36) ayant, sur un côté, ladite image (40) présentée d'une manière modulée en fréquence et, sur l'autre côté, ladite texture aléatoire (42).

10. Substrat selon la revendication 9, dans lequel la couche transparente (36) comprend une couche de matériau plastique.

11. Substrat selon la revendication 10, dans lequel ladite couche transparente (36) a une épaisseur entre 12 et 25 microns.

12. Substrat selon la revendication 11, dans lequel la couche transparente (36) a une épaisseur d'environ 20 microns.

13. Substrat pour une souris optique, le substrat ayant une image et une surface, **caractérisé en ce que** l'image est présentée d'une manière modulée en fréquence et l'image et la surface sont texturées de manière aléatoire.

14. Substrat selon l'une quelconque des revendications précédentes, dans lequel le substrat est incorporé dans un tapis de souris (10, 20, 28, 38).

15. Substrat selon l'une quelconque des revendications précédentes, dans lequel l'image (14, 24, 40) est imprimé de manière stochastique.

16. Substrat selon l'une quelconque des revendications précédentes, dans lequel la texture aléatoire de ladite surface texturée de manière aléatoire (27, 42) a une profondeur moyenne d'environ 0,5 mm.

17. Procédé de formation d'un substrat pour une souris optique, le procédé comprenant les étapes de :
fournir une image (14, 24, 40) présentée d'une manière modulée en fréquence sur un substrat ; et
appliquer une texture aléatoire (27, 42) à l'image.

18. Procédé selon la revendication 17, dans lequel l'étape d'appliquer la texture aléatoire (27, 42) à l'image comprend l'étape de texturation de l'image.

19. Procédé selon la revendication 17, dans lequel l'étape d'application de la texture aléatoire (27) comprend les étapes d'appliquer une couche transparente (26) au-dessus de l'image (24) et d'appliquer une texture aléatoire (27) à la couche transparente (26).

20. Procédé selon la revendication 19, dans lequel l'étape d'application de la texture aléatoire (27) à la couche transparente (26) comprend la poussée de l'image (24) et de la couche transparente (26) contre un gabarit.

21. Procédé selon la revendication 19 ou la revendication 20, dans lequel l'application de la texture (27) à la couche transparente (26) a pour résultat que la couche d'image (24) et la couche transparente (26) sont toutes deux texturées.

22. Procédé selon la revendication 19 ou la revendication 20, dans lequel l'application de la texture (27) a pour résultat que la couche transparente (26) est texturée.

23. Procédé selon la revendication 17, dans lequel l'étape d'application de la texture aléatoire (27) à l'image (24) comprend l'étape d'appliquer une couche transparente (26) ayant une surface texturée de manière aléatoire sur l'image (24).

24. Procédé selon la revendication 17, le procédé comprenant les étapes de :
fournir une couche transparente de matériau plastique (36) ;
appliquer l'image (40) présentée d'une manière modulée en fréquence à la couche transparente (36) ; et
appliquer une texture aléatoire (42) à la couche transparente (36).

25. Procédé selon la revendication 24, dans lequel l'image (40) est fournie sur un côté de la couche (36) et la texture aléatoire (42) est appliquée à l'autre côté de la couche (36).

26. Procédé de formation d'un substrat pour une souris optique, le procédé comprenant les étapes de :
fournir une couche transparente (36) de matériau plastique, ladite couche (26) ayant une texture aléatoire (27) ; et
appliquer à la couche transparente une image (24) présentée de manière modulée en fréquence.
